# EUROPEAN PATENT APPLICATION

(11) **EP 1 510 252 A1**
(43) Date of publication of application: **02.03.2005**
(21) Application number: 03721046.5
(22) Date of filing: 07.05.2003
(51) Int. Cl.: B01F 17/52, C09D 151/06, C09D 7/12, C09D 11/00

(54) **SURFACTANT AND DISPERSION AID EACH COMPRISING GRAFT FLUOROPOLYMER**

(30) Priority: 10.05.2002 JP 2002136087; 28.06.2002 JP 2002190834
(71) Applicant: Daikin Industries, Ltd., Osaka-shi, Osaka 530-8323 (JP)
(72) Inventor: HANAZAWA, Makoto c/o Yodogawa Works, Settsu-shi, Osaka 566-8585 (JP); ITAMI, Yasuo c/o Yodogawa Works, Settsu-shi, Osaka 566-8585 (JP)
(74) Representative: HOFFMANN - EITLE
(86) International application number: PCT/JP2003/005688
(87) International publication number: WO 2003/095083

(57) **Abstract**

A surfactant comprising a graft polymer having a branch polymer and a trunk polymer, at least one of which contains a fluoroalkyl group, has high solubility in a liquid medium and shows a superior surface tension-lowering action, in spite of containing fluoroalkyl groups at a high concentration. The surfactant also has high solubility in a liquid medium, in spite of containing a short-chain perfluoroalkyl group which is poor in surface tension-lowering action, and further shows a superior action to decrease the surface tension of a solution. The use of this surfactant can provide a liquid dispersion well dispersed in a liquid medium having a small environmental load.

## Description

### FIELD OF THE INVENTION

The present invention relates to surfactants and dispersion aids both comprising graft fluoropolymers. The surfactants of the present invention are used in a variety of fields because they have high surface tension-lowering actions to improve the wetting, penetrating and leveling properties of solutions to the surfaces of solid materials. For example, the surfactants of the present invention are used as modifiers for liquids such as paints, ink and emulsions for photographs, or surface treatment agents or internal additives, so as to modify the surfaces of solid materials such as textiles, films and powder to thereby impart stain-proofing properties, water- and oil-repellant properties and lubricity to such solid materials. In addition, the surfactants of the present invention are used as agents for remedying defects of paint layers, agents for protecting coating layers, agents for lowering the surface tension of ink, surface treatment agents for pigments, dispersants for pigments, etc. in the pigment, paint and ink industries. Further, the surfactants of the present invention are used as penetrants for use in processing textiles, textile oils, water- and oil-repellant processing agents for textiles, stain-proofing agents for textiles, and oil-repellant treatment agents for paper in the paper and textile industries. Furthermore, the surfactants of the present invention are used as defoaming aids, internal additives for plastics and rubber, wet type film-forming aids for urethanes, and mold release agents for urethanes in the rubber and plastic industries. Furthermore, the surfactants of the present invention can be used in other various industrial fields, as detergents, removers for floor waxes, leveling agents for waxes, spot-preventing agents for plating, agents for defoaming aqueous foams, emulsions for photographs, internal additives for vinyl films as fog-preventing materials for agricultural green houses, flux-preventing agents for solder, water- and oil-repellant processing agents for leathers, stain-proof processing agents for leathers, unevenness-preventing agents for films formed by spin-coating, additives for adhesives, etc.

On the other hand, the dispersion aids of the present invention are used to coat the surfaces of various kinds of substrates, or used as internal addition type modifiers for resins. Particularly, the agents of the present invention are useful as internal additives or coatings required to have surface properties which protect the surfaces of materials from the adhesion of stains and water or the like, or required to have lubricity.

The present invention also relates to fluoropolymer dispersion compositions comprising fluoropolymers, liquid media and the above surfactants or the above dispersion aids.

### RELATED ART

Fluoropolymers are used in dry lubricants, release agents, industrial thickeners, and non-tacky and abrasion resistant films of cocking utensils such as frying pans, and irons, because of their features such as low surface energies, and physical and chemical stabilities (e.g., abrasion resistance, corrosion resistance, non-tackiness, etc.).

Fluoropolymer dispersion compositions are used to coat various substrates with fluoropolymer films. Further, the fluoropolymer dispersion compositions are used as internal additives for stain-proof and water repellant FRP. When construction materials of kitchens and bathrooms are made of FRP, such materials are made by simultaneously adding glass fibers and fluoropolymers to liquid polyesters, and further adding crosslinking agents to the mixtures, thereby curing and molding the mixtures.

However, the dispersion compositions cannot be easily obtained, since the affinity of the fluoropolymers to the media is poor because of their low surface energies, one of the features of the fluoropolymers. When the fluoropolymer is powder of a tetrafluoroethylene resin having a low molecular weight of up to 10,000, or a copolymer which is prepared from tetrafluoroethylene and copolymerizable monomers for modification (such as hexafluoropropylene, perfluoro(propyl vinyl ether)chlorotrifluoroethylene, etc.), an article coated with a film formed from such powder or such a copolymer is insufficient in low surface energy (non-tackiness) and chemical stability, as compared with an article coated with a film formed from a tetrafluoroethylene resin having a molecular weight of 100,000 or more. This is because the film of the former article has a low molecular weight and has portions other than the fully fluorinated tetrafluoroethylene. For example, JP-A-08-108139 describes the coating of an article with an aqueous dispersion of a tetrafluoroethylene/hexafluoropropylene copolymer.

Hitherto, halogen-containing solvents, fluorine-containing solvents and aromatic solvents have been mainly used as solvents for dispersions, and have given heavy loads on the environments. Particularly, the fluorine-containing solvents have low boiling points and soon evaporate during coating operations, and thus make it hard to obtain homogeneous films, resulting in low cost*-effectiveness. It is difficult to obtain a liquid dispersion by using a general-purpose organic solvent which makes it possible to coat a tetrafluoroethylene resin having a molecular weight of 100,000 or more, and which has less environmental load and has a boiling point suitable for coating and costs lower, because the tetrafluoroethylene resin is poor in affinity to such a solvent. It has hitherto been difficult to internally add and homogeneously disperse a tetrafluoroethylene resin having a molecular weight of 100,000 or more in a resin medium, since the tetrafluoroethylene resin agglomerates for the same reason.

In general, the use of fluoroalkyl group-containing surfactants is effective to greatly decrease the surface tensions of solutions, in spite of low concentrations, as compared with hydrocarbon-based surfactants. Therefore, the fluoroalkyl group-containing surfactants exhibit various actions for emulsification, dispersion and dissolution. For example, as disclosed in JP-A-62-226143 and JP-A-62-170950, a perfluoroalkyl group-containing surfactant is used to obtain a coating layer with an uniform thickness, by dissolving or dispersing this surfactant together with a photosensitive composition in a solvent, uniformly coating the resultant solution or dispersion to a substrate, and drying the resulting coating layer. Thus, perfluoroalkyl group-containing surfactants are particularly useful for obtaining homogeneous dispersions and leveling coating layers.

Similar applications are found in JP-A-11-504360. This publication proposes surfactants for use in dispersing fluoropolymers in liquid solvents to obtain liquid fluoropolymer dispersions. While the solvents used are ozone-non-destructive, the amounts of tetrafluoroethylene resins dispersed in expensive fluorinated solvents are merely 2 wt.% or so, because the dispersibility of the fluoropolymers is poor.

On the other hand, the in vivo accumulation of compounds having perfluorooctylsulfonic acid groups have recently brought about social problems, and the environmental pollution due to perfluoroalkyl groups each having 8 or more carbon atoms has drawn keen public attentions. Any of the above surfactants of the prior art contains perfluorooctyl-sulfonic acids and has a danger of polluting the environment. It is said that short-chain perfluoroalkyl, particularly having 4 or less carbon atoms, is low in possibility of in vivo accumulation, and therefore, surfactants comprising short-chain perfluoroalkyl groups are desired so as to decrease the environmental loads. However, the surfactants comprising short-chain perfluoroalkyl groups are poor in surface tension-lowering action, even though the content of fluorine is equal to that of a surfactant comprising long-chain perfluoroalkyl groups. If the content of fluorine is increased, the surface tension-lowering action of the surfactant is improved, but the solubility, particularly water solubility, of the surfactant becomes poor.

### SUMMARY OF THE INVENTION

Under the foregoing circumstances, an object of the present invention is to provide a compound which has high solubility in a liquid medium in spite of containing fluoroalkyl groups at a high concentration, and which has excellent action to decrease the surface tension of a solution. Another object of the invention is to provide a surfactant which has high solubility in a liquid medium in spite of containing short-chain perfluoroalkyl groups poor in surface tension-lowering action, and which has an excellent action to lower the surface tension of a solution. By using such a surfactant, a liquid dispersion which is well dispersed in a liquid medium having a small environmental load can be obtained.

The present invention is intended to improve the conventional fluoroalkyl group-containing surfactants poor in solubility or surface tension-lowering action to thereby provide surfactants and dispersion aids both of which have high solubility and can lower the surface tensions of solutions, and to further provide surfactants which preferably comprise short-chain perfluoroalkyl groups and which have high solubility and can lower the surface tensions of solutions.

The present inventors have discovered that a surfactant and a dispersion aid, each of which comprises a graft polymer having a branch polymer and a trunk polymer, at least one of which contains repeating units having fluoroalkyl groups, have high solubility in liquid media in spite of containing fluoroalkyl groups at high concentrations, and that such surfactant and dispersion aid exhibit comparable or superior actions of lowering the surface tensions of solutions in spite of containing smaller amounts of fluorine atoms than random polymers. They also have discovered that the addition of the above surfactant or the above dispersion aid makes it possible to sufficiently disperse a fluoropolymer poor in affinity to a liquid medium (e.g., powder of a tetrafluoroethylene resin) in a liquid medium. They further have discovered that even a graft polymer having repeating units of short-chain perfluoroalkyl groups each having not larger than 7 carbon atoms can have an improved solubility in a liquid medium.

That is, the present invention provides surfactants and fluoropolymer-dispersing aids each comprising graft polymers, fluoropolymer-dispersed compositions, and articles whose surfaces are coated with layers formed from such fluoropolymer dispersion compositions.

### BRIEF DESCRIPTION OF THE DRAWINGS

Fig. 1 shows a graph indicating the dynamic surface tensions of the polymers obtained in Examples and Comparative Examples, in dimethyl formamide.
Fig. 2 shows a graph indicating the dynamic surface tensions of the polymers obtained in Examples and Comparative Examples, in butyl cellosolve.
Fig. 3 shows a graph indicating the dynamic surface tensions of the polymers obtained in Examples and Comparative Examples, in water.

### DETAILED DESCRIPTION OF THE INVENTION

A graft polymer comprising a branch polymer and a trunk polymer, at least one of which has a fluoroalkyl group, has high solubility in a liquid medium even though containing fluoroalkyl groups at a high concentration. Even a graft polymer having repeating units of short-chain perfluoroalkyl groups each having not larger than 7 carbon atoms has high solubility in a liquid medium and can be used as a surfactant which exhibits a comparable or superior surface tension-lowering action, in spite of having a smaller content of fluorine atoms than a random polymer. The addition of the graft polymers of the present invention makes it possible to sufficiently disperse solid materials such as the powder of tetrafluoroethylene resins, poor in affinity to media, in liquid media, because the polymer moiety, containing fluoroalkyl groups, of such a graft polymer has affinity with a fluoropolymer, and because the other polymer moiety thereof has affinity with a liquid medium.

Generally, the graft polymer of the present invention is a graft polymer in which at least one of the branch polymer and the trunk polymer contains repeating units of fluoroalkyl groups. The branch polymer containing fluoroalkyl groups may be grafted to the trunk polymer.

Preferably, the fluoroalkyl group is a perfluoroalkyl group. The fluoroalkyl group (particularly a perfluoroalkyl group) has 1 to 21 carbon atoms, for example, 1 to 7 carbon atoms, particularly 1 to 4 carbon atoms. Particularly preferable fluoroalkyl group (or Rf group) is C₄F₉. A graft polymer having fluoroalkyl groups represented by the formula: C₄F₉ can maintain sufficient dispersibility to a liquid medium (e.g., water, organic solvents, etc.) in spite of having a high content of fluorine atoms, and further has high surface activity because of the neighbor aggregation effect of the fluoroalkyl groups.

In the present invention, a graft polymer in which the branch polymer is grafted to the isocyanate group moiety of the trunk polymer may be used.

In one of embodiments, the trunk polymer comprises a repeating unit derived from an isocyanate group-containing vinyl monomer, and if necessary, a repeating unit derived from other copolymerizable monomer. The isocyanate groups in the repeating unit derived from the isocyanate group-containing vinyl monomer reacts with the active hydrogen atoms of the branch polymer to thereby bond the trunk polymer to the branch polymer.

The isocyanate group-containing vinyl monomer referred to throughout the description means a polymerizable compound having a carbon-carbon double bond and an isocyanate group. In a typical isocyanate group-containing vinyl monomer, the numbers of the carbon-carbon double bonds and the isocyanate groups are one, respectively. In general, the molecule of the isocyanate group-containing vinyl monomer has a carbon-carbon double bond at one of the ends, and an isocyanate group at the other end.

Examples of the isocyanate group-containing vinyl monomer include
(i) an isocyanate group-containing (meth)acrylate ester,
(ii) a vinyl isocyanate represented by the formula:

   H₂C=C(R¹¹)-A¹-NCO

   wherein R¹¹ is H or a linear, branched or cyclic hydrocarbon group (for example, an alkyl group) having 1 to 20 (for example, 1 to 10) carbon atoms, and A¹ is a direct bond or a hydrocarbon group having 1 to 20 carbon atoms, and
(iii) a reaction product of (iii-1) a compound having two isocyanate groups and (iii-2) a compound having a carbon-carbon double bond and an active hydrogen (generally, a compound having one carbon-carbon double bond and one active hydrogen-containing group).

Examples of the isocyanate group-containing (meth)acrylate ester (i) include the compounds of the formula:

H₂C=C(R¹²)COO(CH₂CH₂O)ₙ(CH₂)ₘ-NCO

wherein R¹² is H or CH₃, n is from 0 to 20, and m is from 1 to 20 (for example, 2-isocyanatoethyl (meth)acrylate).

Examples of the vinyl isocyanate (ii) include the compounds of the formula:

H₂C=C(R¹³)-NCO

wherein R¹³ is a linear, branched or cyclic hydrocarbon group (for example, an alkyl group or a cyclohexyl group) having 1 to 20 (for example, 1 to 10) carbon atoms, the compounds of the formula:

H₂C=C(R¹⁴)-(CH₂)ₙ-NCO

wherein R¹⁴ is H or a linear, branched or cyclic hydrocarbon group (for example, an alkyl group or a cyclohexyl group) having 1 to 20 (for example, 1 to 10) carbon atoms, and n is from 2 to 20, and the compounds of the formula:

H₂C=C(R¹⁵)-Ph-C(R¹⁶)₂-NCO

wherein R¹⁵ is H or CH₃, R¹⁶ is H or CH₃, and Ph is a phenylene group.

Examples of the compound having two isocyanate groups (iii-1) include 2,4-tolylene diisocyanate, 2,6-tolylene diisocyanate, diphenylmethane diisocyanate, naphthalene diisocyanate, hexamethylene diisocyanate, xylene diisocyanate, and isophorone diisocyanate.

Examples of the compound having a carbon-carbon double bond and an active hydrogen (iii-2) (hereinafter referred to as "a monomer having an active hydrogen") include hydroxyethyl (meth)acrylate, the compounds of the formula:

HO(CH₂CH₂O)ₙCOC(R¹⁷)C=CH₂

wherein R¹⁷ is H or CH₃ and n is from 2 to 20, and aminoethyl (meth)acrylate.

The reaction between the compound having two isocyanate groups (iii-1) and the monomer having an active hydrogen (iii-2) may be conducted in a solvent (especially, an aprotic solvent, for example, an ester solvent) and optionally in the presence of a catalyst such as dibutyltin dilaurate. The amount of the monomer having an active hydrogen (iii-2) in the reaction may be from 1.0 to 2.0 equivalents, preferably from 1.0 to 1.7 equivalents, based on the compound having two isocyanate groups (iii-1).

The amount of the isocyanate group-containing vinyl monomer may have the lower limit of 1% by weight, for example 2% by weight, particularly 6% by weight, and the upper limit of 30% by weight, for example 20% by weight, particularly 10% by weight, based on the weight of the trunk polymer.

The other copolymerizable monomer constituting the trunk polymer may be any one, in so far as it is an addition-polymerizable monomer (namely, a compound having a carbon-carbon double bond), and it is selected in accordance with a solvent for dispersing a fluoropolymer therein. The other copolymerizable monomer may be either a fluorine-free monomer or a fluorine-containing monomer. The amount of the fluorine-free monomer may have the lower limit of 50% by weight, for example 60% by weight, particularly 70% by weight, and the upper limit of 99% by weight, for example 98% by weight, particularly 90% by weight, based on the weight of the trunk polymer. The amount of the fluorine-containing monomer may have the lower limit of 0% by weight, for example 1% by weight, and the upper limit of 50% by weight, for example 30% by weight, based on the weight of the trunk polymer.

Examples of the fluorine-free monomer include (meth)acrylate esters. The (meth)acrylate ester may be an ester of (meth)acrylic acid and an aliphatic alcohol such as a monohydric alcohol or a polyhydric alcohol (for example, a dihydric alcohol).

The following compounds are included in the examples of the fluorine-free monomer: (meth)acrylates such as 2-ethylhexyl (meth)acrylate, cyclohexyl (meth)acrylate, lauryl (meth)acrylate, stearyl (meth)acrylate, hydroxyalkyl (meth)acrylate, tetrahydrofurfuryl (meth)acrylate, polyoxyalkylene (meth)acrylate, alkoxypolyoxyalkylene (meth)acrylate, 3-chloro-2-hydroxypropyl (meth)acrylate, glycidyl (meth)acrylate, N,N-dimethylaminoethyl (meth)acrylate, N,N-diethylaminoethyl (meth)acrylate, benzyl (meth)acrylate, glycidyl methacrylate, hydroxypropyl monomethacrylate, 2-hydroxy-3-phenoxypropyl acrylate, 2-hydroxyethyl acrylate, glycerol monomethacrylate, β-acryloyloxyethyl hydrogen succinate, β-methacryloyloxyethyl hydrogen phthalate, 2-acryloyloxyethylhexahydrophthalic acid, 2-acryloyloxyethylphthalic acid, 2-acryloyloxyethyl-2-hydroxyethylphthalic acid, methacrylic acid hydroxypropyltrimethyl ammonium chloride, 2-acryloyloxyethyl acid phosphate, glucosyl ethyl methacrylate, methacrylamide, 2-hydroxy-3-acryloyloxypropyl methacrylate, 2-methacryloylethyl acid phosphate, and hydroxypivalic acid neopentyl glycol diacrylate; styrenes such as styrene and p-isopropylstyrene; (meth)acrylamides such as (meth)acrylamide, N,N-dimethylacrylamide, acryloylmorpholine, diacetone(meth)acrylamide, N-methylol(meth)acrylamide, N-butoxymethylacrylamide, and 2-acrylamide-2-methylpropanesulfonic acid; and vinyl ethers such as vinyl alkyl ether.

Further examples of the fluorine-free monomer include ethylene, butadiene, vinyl acetate, chloroprene, vinyl halide such as vinyl chloride, vinylidene halide, acrylonitrile, vinyl alkyl ketone, maleic anhydride, N-vinylcarbazole, vinyl pyrrolidone, and (meth)acrylic acid.

The fluorine-free monomer may be a silicon-containing monomer (for example, (meth)acryloyl group-containing alkylsilane, (meth)acryloyl group-containing alkoxysilane, and (meth)acryloyl group-containing polysiloxane).

Examples of the silicon-containing monomer include (meth)acryloxytrialkylsilane, (meth)acryloxytrialkoxysilane, (meth)acryloxypolysiloxane, (meth)acryloxypropyltrialkylsilane, (meth) acryloxypropyltrialkoxysilane, (meth)acryloxypropylpolysiloxane, allyltrialkylsilane, allyltrialkoxysilane, allylpolysiloxane, vinyltrialkylsilane, vinyltrialkoxysilane, and vinylpolysiloxane.

The (meth)acryloxypropylpolysiloxane may be a compound of the formula: 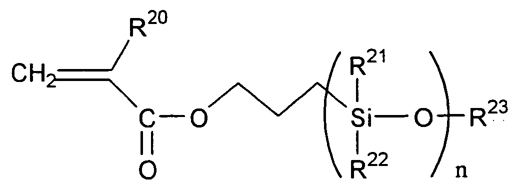 wherein each of R²⁰, R²¹, R²² and R²³ is H or CH₃, and n is from 1 to 100.
For example, the (meth)acryloxypropylpolysiloxane is (meth)acryloxypropylpolydimethylsiloxane.

At least two types of the above fluorine-free monomers may be used in combination.

Examples of the fluorine-containing monomer constituting the trunk polymer may be the same ones as the fluorine-containing monomers constituting the below-mentioned branch polymers (for example, fluoroalkyl group-containing (meth) acrylate, fluorinated olefin). The fluorine-containing monomer may be, for example, a fluorine-containing methacrylate or acrylate.

The trunk polymer may be a block polymer or a random polymer.

The branch polymer can be formed by using a chain transfer agent, a fluoroalkyl group-containing vinyl monomer and, if necessary, another fluorine-containing monomer and a fluorine-free monomer.

The chain transfer agent may be a chain transfer agent having active hydrogen groups at both ends, and examples thereof include an alkylene thiol chain transfer agent having active hydrogen groups and an aryl chain transfer agent having active hydrogen groups. Examples of the active hydrogen group include OH, NH₂, SO₃H, NHOH, COOH and SH. The number of carbon atoms in the alkylene group of the alkylene thiol may be from 1 to 20.

Examples of the alkylene thiol chain transfer agent include the followings:
HS(CH₂)ₙOH [n is from 1 to 20, particularly 2, 4, 6 or 11],

HSCH₂COOH,

HSCH₂CH(CH₃)COOH,

HSCH₂CH₂SO₃Na,

HSCH₂CH₂SO₃H,

and

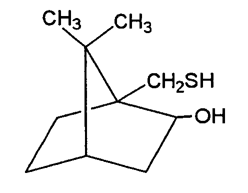

Examples of the aryl chain transfer agent include the followings:

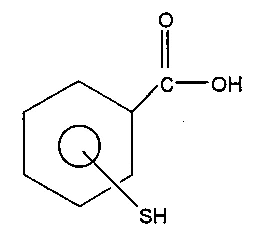

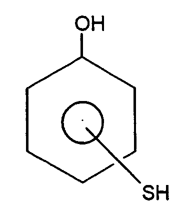

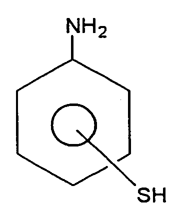

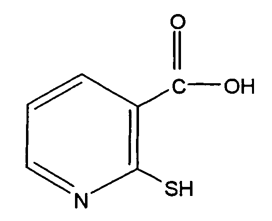

The active hydrogen group of the chain transfer agent reacts with the isocyanate group of the trunk polymer to form a -NH-C(=O)- linkage (an amide linkage). When the active hydrogen group is an OH group, a urethane linkage (-NH-C(=O)-O-) is formed. When the active hydrogen group is an NH₂ group, a urea linkage (-NH-C(=O)-NH-) is formed. The amount of the isocyanate group of the trunk polymer is preferably from 1.0 to 2.5 equivalents, for example, from 1.0 to 2.0 equivalents, based on 1.0 equivalent of the chain transfer agent.

The amount of the chain transfer agent may be from 0.05 to 0.7 mol, preferably from 0.1 to 0.6 mol, based on 1 mol of the branch monomer. The chain transfer agent is bonded to one end of the branch polymer which is obtained by polymerizing the branch monomer. The chain transfer agent can control the length of the chain of the branch polymer.

The fluoroalkyl group-containing vinyl monomer may be (meth)acrylate having a fluoroalkyl group.

The fluoroalkyl group-containing (meth)acrylate may be the compounds represented by the following general formula:

Rf-A²-OC (=O) CR¹⁸=CH₂

wherein Rf is a linear or branched fluoroalkyl group having 1 to 21 carbon atoms, R¹⁸ is hydrogen or a methyl group, and A² is a divalent organic group.

Examples of the fluoroalkyl group-containing (meth)acrylate include the followings:

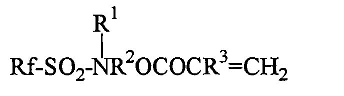

Rf-(CH₂)ₙOCOCR³=CH₂

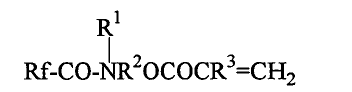

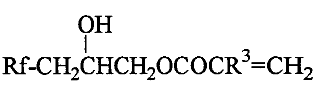

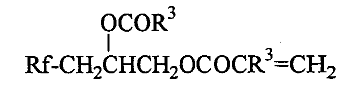

Rf-O-Ar-CH₂OCOCR³=CH₂

wherein Rf is a fluoroalkyl group having 1 to 21 carbon atoms, R¹ is hydrogen or an alkyl group having 1 to 10 carbon atoms, R² is an alkylene group having 1 to 10 carbon atoms, R³ is hydrogen or a methyl group, Ar is an arylene group which optionally has a substituent group, and n is an integer of 1 to 10.

Specific examples of the fluoroalkyl group-containing (meth)acrylate include the followings:

CF₃(CF₂)ₚ(CH₂)_{q}OCOCH=CH_{2,}

CF₃(CF₂)ₚCH=CH(CH₂)_{q}OCOCH=CH₂,

(CF₃)₂CF(CF₂)ₚ(CH₂)_{q}OCOCH=CH₂,

H(CF₂)ₚ(CH₂)_{q}OCOCH=CH₂,

CF₃CHFCF₂(CH₂)_{q}OCOCH=CH₂,

CF₃(CF₂)ₚ(CH₂)_{q}OCOC(CH₃)=CH₂,

CF₃(CF₂)ₚCH=CH(CH₂)_{q}OCOC(CH₃)=CH₂,

(CF₃)₂CF(CF₂)ₚ(CH₂)_{q}OCOC(CH₃)=CH₂,

H(CF₂)ₚ(CH₂)_{q}OCOC(CH₃)=CH₂,

CF₃CHFCF₂(CH₂)ₚOCOC(CH₃)=CH₂,

CF₃(CF₂)ₚSO₂N(CₛH₂ₛ₊₁) (CH₂)_{q}OCOCH=CH₂,

CF₃(CF₂)ₚSO₂N(CₛH₂ₛ₊₁)(CH₂)_{q}OCOC(CH₃)=CH₂,

CF₃C₆F₁₀(CF₂)ₚSO₂N(CH₃)(CH₂)_{q}OCOCH=CH₂,

CF₃C₆F₁₀(CF₂)ₚSO₂N(CH₃)(CH₂)_{q}OCOC(CH₃)=CH₂,

(CF₃)₂CF(CF₂)ₚCH₂CH(OCOCH₃)CH₂OCOCH=CH₂,

(CF₃)₂CF(CF₂)ₚCH₂CH(OCOCH₃)CH₂OCOC(CH₃)=CH₂,

(CF₃)₂CF(CF₂)ₚCH₂CH(OH)CH₂OCOCH=CH₂,

(CF₃)₂CF(CF₂)ₚCH₂CH(OH)CH₂OCOC(CH₃)=CH₂,

[p = 0 to 20, q = 1 to 10, s = 1 or 2]

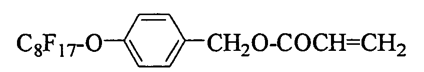

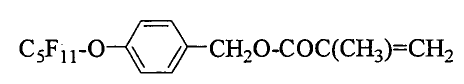

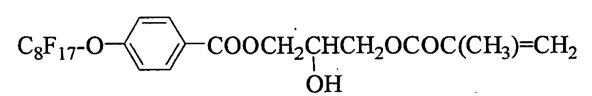

As a matter of course, at least two types of the fluoroalkyl group-containing (meth)acrylates may be used in combination.

In the branch polymer, other fluorine-containing monomer may be used. Examples of the other fluorine-containing monomer include fluorinated olefins (each having, for example, 1 to 20 carbon atoms) such as CF₃(CF₂)₇CH=CH₂, 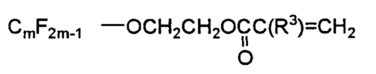 for example, 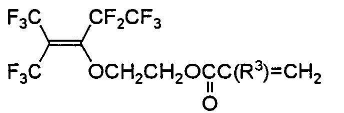 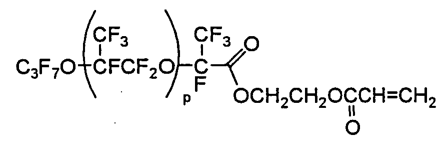 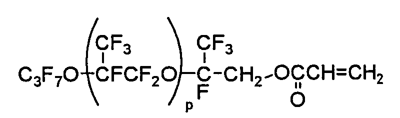 The amount of the other fluorine-containing monomer in the branch polymer is at most 20% by weight, for example, at most 10% by weight, particularly at most 5% by weight, based on the weight of the monomer components in the branch polymer.

In the branch polymer, a fluorine-free monomer may be used. Examples of the fluorine-free monomer used in the branch polymer include the same fluorine-free monomers as those used in the trunk polymer. The fluorine-free monomer in the branch polymer may be a (meth)acrylate ester, for example, an ester between an aliphatic monohydric alcohol and (meth) acrylic acid.

The amount of the fluorine-free monomer in the branch polymer may be at most 80% by weight, e.g. at most 50% by weight, particularly at most 30% by weight, based on the monomer components of the branch polymer.

The branch polymer may be a block polymer or a random polymer. The polymerization degree of the branch polymer is from 3 to 25 molecules, and preferably from 4 to 20 molecules of the monomer, based on one molecule of the chain transfer agent.

The graft polymer comprises the trunk polymer and the branch polymer. The weight ratio of the trunk polymer to the branch polymer may be from 5:95 to 95:5, preferably from 10:90 to 90:10, particularly from 30:70 to 70:30.

The number-average molecular weight (measured by GPC, converted to polystyrene, in THF) of the graft polymer may be from 1,000 to 200,000, preferably from 5,000 to 100,000.

The graft polymer of the present invention may be prepared by any of known methods, and some of the methods are herein described.
(1) A method of synthesizing a graft polymer, which includes graft polymerization of a macromonomer.
(2) A method of reacting a branch polymer having an active hydrogen group at one end, which is polymerized by using a chain transfer agent having an active hydrogen group, with a trunk polymer having a group (e.g., NCO group, glycidyl group and acid chloride group) reactive with an active hydrogen.
(3) A method comprising the steps of forming a living free radical in a trunk polymer having a halomethyl group by a metal halide catalyst, and replacing a halogen atom with a branch polymer, as in the ATRP method (Atomic Transfer Radical Polymerization).
(4) A method of polymerizing a branch monomer by using a chain transfer initiator species such as a free radical, cationically active species, anionically active species, hydroperoxide or the like, in a trunk polymer (cf. JP-B-61-50082).

Typically, the graft polymerization method (1) of a macromonomer is carried out as follows: a perfluoroalkyl group-containing vinyl monomer and a fluorine-free vinyl monomer are radical-polymerized in the presence of a mercaptan-based chain transfer agent having an active hydrogen group such as a hydroxyl group, carboxyl group, amino group, sulfonic acid group or the like, to obtain a polymer having an active hydrogen group at one end; the resulting polymer is reacted with a vinyl monomer which has a group reactive with an active hydrogen, such as a NCO group, glycidyl group, acid chloride group or the like, and a group having a polymerizable double bond, to obtain a macromonomer; and this macromonomer is copolymerized with a perfluoroalkyl group-containing vinyl monomer and a fluorine-free vinyl monomer which consititute a trunk polymer, to obtain a graft polymer.

The method (2) of reacting a trunk polymer having a group (e.g., a NCO group, glycidyl group, and acid chloride group or the like) reactive with an active hydrogen atom, with a branch polymer polymerized by using a chain transfer agent having an active hydrogen group is carried out as follows: firstly, a vinyl monomer having a group reactive with an active hydrogen and a polymerizable double bond is radical-polymerized with a perfluoroalkyl group-containing vinyl monomer, and if needed, a fluorine-free vinyl monomer, to obtain a trunk polymer having a group reactive with an active hydrogen; the resultant trunk polymer is radical-polymerized with a perfluoroalkyl group-containing vinyl monomer, and if needed, a fluorine-free vinyl monomer, in the presence of a mercaptan-based chain transfer agent having an active hydrogen group such as a hydroxyl group, carboxyl group, amino group and sulfonic group, to obtain a branch polymer having an active hydrogen at one end; and the active hydrogen atom of the branch polymer is reacted with the group, reactive with an active hydrogen atom, of the trunk polymer, to thereby obtain a graft polymer.

For example, a graft polymer may be prepared by either of the following methods:
(A) a method of preparing a macromonomer by reacting a vinyl monomer reactive with an active hydrogen, with a branch polymer, and copolymerizing the macromonomer with a copolymerizable monomer (a trunk monomer) to form a trunk polymer (a method of polymerizing a trunk monomer in the presence of a branch polymer), and
(B) a method of preparing a trunk polymer by copolymerizing a vinyl monomer reactive with an active hydrogen, with a copolymerizable monomer, and reacting the trunk polymer with a branch polymer (a method of separately polymerizing a branch polymer and a trunk polymer).

The method (A) comprises the steps of:
(A-1) polymerizing a chain transfer agent and a fluoroalkyl group-containing vinyl monomer, which are constituent components of a branch polymer, and, if necessary, other fluorine-containing monomer and a fluorine-free monomer to give a branch polymer;
(A-2) reacting the resultant branch polymer with a vinyl monomer reactive with an active hydrogen, to give a macromonomer; and
(A-3) polymerizing the resultant macromonomer with a copolymerizable monomer constituting a trunk polymer to give a graft polymer.

The method (B) comprises the steps of:
(B-1) polymerizing a vinyl monomer reactive with an active hydrogen and a copolymerizable monomer, which are constituent components of a trunk polymer, to give a trunk polymer reactive with an active hydrogen; and
(B-2) grafting a separately synthesized branch polymer onto the resultant trunk polymer to give a graft polymer.

The polymerization step (A-1) of the branch polymer and the polymerization steps (A-3) and (B-1) of the trunk polymers may be conducted in solvents at temperatures of 70 to 80°C in the presence of polymerization initiators. The polymerization time is generally from 2 to 12 hours.

As the polymerization initiator, for example, azobisisobutyronitrile, benzoyl peroxide, di-tert-butyl peroxide, lauryl peroxide, cumene hydroperoxide, tert-butyl peroxide pivalate, diisopropylperoxy dicarbonate and the like are used. The amount of the polymerization initiator is preferably from 1 to 10 parts by weight based on 100 parts by weight of the monomer.

The polymerization solvent may be a polar solvent, a hydrocarbon solvent, or a mixture of these solvents. When a group reactive with an active hydrogen exists in the reaction system (namely, in the steps (A-2), (B-1) and (B-2)), a protic solvent having an active hydrogen group, such as alcohol solvent, can not be used.

The polar solvent is a solvent having a polar group in the molecule. Examples of the polar group include a hydroxyl group, a carboxyl group, an ester group, an acyl group, and an ether oxygen group. Examples of the polar solvent include an alcohol solvent, a glycol solvent, an ester solvent, and a ketone solvent.

The hydrocarbon solvent may be a solvent consisting of carbon and hydrogen. The hydrocarbon solvent may be an aliphatic hydrocarbon. Examples of the hydrocarbon solvent include n-heptane, n-hexane, n-octane, cyclohexane, methylcyclohexane, cyclopentane, methylcyclopentane, methylpentane, 2-ethylpentane, isoparaffin hydrocarbon, liquid paraffin, decane, undecane, dodecane, mineral spirit, and mineral turpentine. In some cases, an aromatic hydrocarbon solvent may be used.

Examples of the alcohol solvent include butyl alcohol and isopropyl alcohol. Examples of the glycol solvent include propylene glycol monomethyl ether, propylene glycol monoethyl ether, dipropylene glycolmonomethyl ether, dipropylene glycol monoethyl ether, and acetates thereof. Examples of the ester solvent include monobasic acid esters such as methyl acetate, ethyl acetate and butyl acetate; and dibasic acid esters such as diethyl succinate, diethyl adipate, dibutyl phthalate and dioctyl phthalate. Examples of the ketone solvent include methyl isobutyl ketone (MIBK), methyl ethyl ketone, and acetone.

A mixture of the hydrocarbon solvent and the polar solvent also may be used. The weight ratio of the hydrocarbon solvent to the polar solvent may be from 100:0 to 0:100, for example, 5:95 to 95:5.

The reaction steps (A-2) and (B-2) of reacting the active hydrogen groups of the chain transfer agents constituting the branch polymers with the groups reactive with active hydrogens, contained in the monomers constituting the trunk polymers, may be conducted in solvents at temperatures of 30°C to 130°C. The reaction time is generally from 2 hours to 24 hours. When the reaction temperature is 50°C or higher, it is needed to add a polymerization inhibitor. When the reaction temperature is 50°C or lower, a polymerization inhibitor is not needed.

Although the solvent may be a polymerization solvent as described above, a protic solvent having an active hydrogen group such as alcohol solvent can not be used.

The graft polymer of the present invention acts as a dispersant which is used to disperse a fluoropolymer in a liquid medium.

A fluoropolymer is a homopolymer or a copolymer of a fluorine-containing monomer. Examples of the fluorine-containing monomer include tetrafluoroethylene, hexafluoropropylene, perfluoroalkylvinyl ether [i.e., the compounds of the formula: CF₂=CF-O-R (in which R represents a straight or branched perfluoroalkyl group having 1 to 20 carbon atoms), such as perfluoro(butylvinylether), perfluoro(propylvinylether) and perfluoro(ethylvinylether)], chlorotrifluoroethylene, vinylidene fluoride, hexafluoropropylene oxide, perfluoroalkylethyl (meth)acrylate, methyl α-fluoroacrylate, and 2-bromo-1,1,2,2-tetrafluoroethyltrifluorovinyl ether.

The fluoropolymer may be a copolymer of a fluorine-containing monomer and a fluorine-free monomer. Also, the fluoropolymer may be polytetrafluoroethylene or a copolymer of tetrafluoroethylene and a copolymerizable modifying monomer [such as hexafluoropropylene, perfluoro(propylvinyether) and chlorotrifluoroethylene].

The molecular weight of the fluoropolymer may be 10,000 to 3,000,000.

The content of fluorine atoms in the fluoropolymer may be 10% by weight or more, for example, 40% by weight or more, particularly 40 to 90% by weight, based on the weight of the fluoropolymer.

The fluoropolymer to be dispersed may be in the form of powder which has an average particle size of, for example, 0.01 to 100 µm.

Examples of the liquid medium include organic solvents, water, mixtures of the organic solvents and water, liquid resins, and mixtures of the liquid resins and the organic solvents.

The organic solvents may be fluorine-containing solvents or fluorine-free solvents. Examples of the fluorine-containing solvents include CFC-113, HCFC-141b, HCFC-225, perfluorohexane and perfluorobenzene. The fluorine-containing solvents may be perfluorocompounds. Typical perfluorocompounds are cyclic and non-cyclic perfluoroalkane, perfluoroamine, perfluoroether, perfluorocycloamine, and all kinds of mixtures thereof. Examples of the perfluorocompounds include perfluoropentane, perfluorohexane, perfluoroheptane, perfluorooctance, perfluoromethylcyclohexane, perfluorotributylamine, perfluorotriamylamine, perfluoro-N-methylmorpholine, perfluoro-N-ethylmorpholine, perfluoroisopropylmorpholine, perfluoro-N-methylpyrrolidine, perfluoro-1,2-bis(trifluoromethyl)hexafluorocyclobutane, perfluoro-2-butyltetrahydrofuran, perfluorotriethylamine, perfluorodibutyl ether, and mixtures of the above perfluorocompounds and other perfluorocompounds. Examples of the fluorine-free solvents include ethers (e.g., cellosolve-based solvents), alcohols, esters, amides (e.g., N-alkylpyrrolidone), heterocyclic hydrocarbons (e.g., morpholine), aromatic solvents (e.g., toluene, benzene, and xylene), hydrocarbon-based solvents (e.g., hexane, decane, and kerosine) and chlorine-containing solvents.

The liquid medium may be a liquid resin. The liquid resin may be a thermosetting resin which can be cured by heating a monomer or a prepolymer, or by adding a crosslinking agent. Examples of the liquid resin are phenol resins, urea resins, melamine resins, furan resins, epoxy resins, unsaturated polyester resins, silicone resins and polyurethane resins.

The present invention further provides a fluoropolymer dispersion composition which comprises a fluoropolymer, a liquid medium and a dispersion aid (i.e., a fluorine-containing graft polymer). The fluoropolymer dispersion composition of the present invention may further contain additives such as a binder polymer (other than the fluoropolymers), carbon powder, and colloidal silica, as required.

In the fluoropolymer dispersion composition, the amount of the dispersion aid is 0.1 to 1,000 parts by weight, for example, 0.1 to 500 parts by weight, and the amount of the additives is 0 to 1,000 parts by weight, per 100 parts by weight of the fluoropolymer. The amount of the liquid medium is 10 to 99% by weight, for example, 20 to 95% by weight, based on the weight of the fluoropolymer dispersion composition.

A variety of substrate can be treated with the fluoropolymer dispersion composition (i.e., a liquid dispersion of a fluoropolymer) of the present invention. Examples of the substrate to be treated include textiles, glass, paper, woods, leather, hides, asbestos, bricks, cements, metals and oxides, ceramics, plastics, coated surfaces and plasters. Examples of the textiles include animal- and vegetable-origin natural fibers such as cotton, hemp, wool, and silk; synthetic fibers such as polyamide, polyester, polyvinyl alcohol, polyacrylonitrile, polyvinyl chloride, and polypropylene; semisynthetic fibers such as rayon and acetate; and mixtures of these fibers.

The fluoropolymer dispersion composition of the present invention can be applied to substrates by a known method such as immersion, coating or the like, and dried. Otherwise, the fluoropolymer dispersion composition of the present invention is internally added to a curable liquid resin, and the mixture is cured and molded so that the fluoropolymer is migrated to the surface of the molded article. For example, a coating layer of the fluoropolymer dispersion composition is formed on the surface of the substrate (for example, a metal).

### PREFERRED EMBODIMENTS OF THE INVENTION

The present invention will be illustrated in more detail by way of the following embodiments, which, however, should not be construed as limiting the scope of the present invention in any way.

The properties were measured as follows.

### Measurement of Dynamic Surface Tension

A solution having a given concentration (0.5 wt.%) was prepared, and the surface tension of the solution was measured with a surface tension meter (BUBBLE PRESSURE TENSIOMETER-BP2 manufactured by KRUESS) by the maximum bubble pressure method, at a temperature of 25 to 30°C. The gas used was a dry air.

### Measurement of Static Surface Tension

Solutions having given concentrations (0.001 wt.%, 0.01 wt.%, 0.1 wt.% and 1 wt.%) were prepared and left to stand alone for one day, and the surface tensions of the solutions were measured with a surface tension meter (SURFACE TENSIOMETER CBVP-A3 manufactured by KYOWA INTERFACE SCIENCE CO., LTD.) by a Wilhelmy's method, at a temperature of 22 to 28°C.

### Solubility in Solvent

A solution having a given concentration was prepared and stirred. Then, the dissolution state of the solution was visually observed and evaluated based on the following criteria.
- VS:: 5% or more dissolved
- S:: 1 to 5% dissolved
- SS:: 1% or less dissolved
- IS:: insoluble

### Dispersibility of Tetrafluoroethylene Resin Powder in Solvent

### [Solubility in Butyl cellosolve]

A product synthesized in Examples (0.5 g) and butyl cellosolve (2-butoxyethanol) (4.5 g) were thoroughly mixed in a 20 mL sample tube, and tetrafluoroethylene resin powder (LUBRON L-2 manufactured by DAIKIN INDUSTRIES, LTD., having a molecular weight of 500,000, a primary particle size of 0.2 µm and a secondary particle size of 5 µm) (5 g) was added and dispersed in the mixture. The resultant liquid dispersion in the sample tube was shaken by the hand to obtain a milky liquid dispersion having a low viscosity. The liquid dispersion was left to stand alone for one day, and the resin powder was found to precipitate. The dispersibility of the resin powder was evaluated as good, when it was visually observed that the resin powder could be dispersed when the liquid dispersion was again shaken.

### [Dispersibility in Hydrocarbon Solvent]

Tetrafluoroethylene resin powder (LUBRON L-2 manufactured by DAIKIN INDUSTRIES, LTD., having a molecular weight of 500,000, a primary particle size of 0.2 µm and a secondary particle size of 5 µm) was added to a hydrocarbon solvent, and the mixture was mixed with a dispersion aid (a polymer) and stirred with a glass bar, to obtain a milky liquid dispersion having a low viscosity. The liquid dispersion was left to stand alone for one day, and the resin powder was found to precipitate. The dispersibility of the resin powder was evaluated as good, when it was visually observed that the resin powder could be dispersed when the liquid dispersion was again shaken. As the dispersion aid, the polymer prepared using the components shown in Table 13, in Example 3 was used.

### Synthesis Example 1

### (Synthesis of isocyanate group-containing vinyl monomer)

In a 500 mL three-necked flask equipped with a dropping funnel, the following components were charged:

| | |
|---|---|
| 2,4-tolylene diisocyanate | 100 g |
| ethyl acetate | 100 g |
| dibutyltin dilaurate | 0.1 g |

While shaking the mixture at a temperature of 50 to 55°C, the followings were added dropwise through the dropping funnel over 15 minutes:

| | |
|---|---|
| hydroxyethyl methacrylate | 90 g |
| ethyl acetate | 90 g |

and the mixture was reacted for 8 hours to give an isocyanate group-containing vinyl monomer (a) shown below:

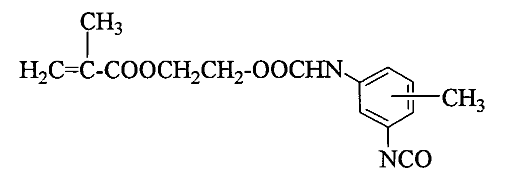

### Example 1

### Preparation of a graft copolymer containing a perfluoroalkyl group having 7 or more carbon atoms:

In a 1,000 mL glass polymerization sample tube, the following components were charged and reacted in a nitrogen atmosphere at 75°C for 8 hours while shaking, to give a branch polymer.

| | |
|---|---|
| Mercaptoethanol | 3 g |
| CF₃CF₂(C₂F₄)ₙC₂H₄OCOCH=CH₂ (FA) [n = 3.5 on average] | 95 g |
| Stearyl methacrylate (StMA) | 5 g |
| Azoisobutyronitrile | 0.17 g |
| Ethyl acetate | 120 g |

After the completion of the reaction, the gas chromatography analysis revealed that 100% of the monomers were consumed. The NMR analysis revealed that the composition ratio (molar ratio) of the respective components in the polymer, namely, the ratio of mercaptoethanol:FA:StMA was 1.0:4.8:0.8.

After lowering the temperature to 55 to 60°C, 9 g of 2-isocyanatoethyl methacrylate and 0.1 g of dibutyltin dilaurate were charged in an air atmosphere and the reaction was conducted at 55 to 60°C for 8 hours while shaking to give a macromonomer. After the completion of the reaction, the absorption peak of the NCO group in the IR spectrum nearly disappeared.

To the macromonomer, the following components were added and the reaction was conducted in a nitrogen atmosphere at 75°C for 8 hours while shaking to give a graft polymer.

| | |
|---|---|
| 2-Ethylhexyl methacrylate (2EHMA) | 100 g |
| Maleic anhydride (MAN) | 10 g |
| Ethyl acetate | 515 g |
| Tert-butylperoxy pivalate (PERBUTYL PV, manufactured by NOF Corp.) | 9 g |

After the completion of the reaction, the gas chromatography analysis revealed that 100% of the monomers were consumed. The GPC analysis revealed that the number average molecular weight of the polymer obtained after distilling off the solvent was 8,000.

The solvent solubility and static surface tension of the resultant polymer were determined. The dispersibility of the tetrafluoroethylene resin powder in butyl cellosolve was evaluated. The results are shown in Tables 5 and 7 to 12.

### Example 2

### Preparation of a graft copolymer containing a perfluoroalkyl group having 7 or more carbon atoms:

A graft polymer was prepared in the same manner as in Example 1, except that 38 g of a solution (50% by weight) of the isocyanate group-containing vinyl monomer (a) prepared in Synthesis Example 1 was used in place of 9 g of 2-isocyanatoethyl methacrylate.

In the preparation of each of the branch polymer and the graft polymer, 100% of the monomers were consumed. After the completion of the reaction for forming a macromonomer, the NCO absorption peak in the IR spectrum nearly disappeared. The GPC analysis revealed that the number average molecular weight of the polymer obtained after distilling off the solvent was 8,500.

The solvent solubility and static surface tension of the resultant polymer were determined. The dispersibility of the tetrafluoroethylene resin powder in the solvent was evaluated. The results are shown in Tables 5 and 7 to 12.

### Example 3

### Preparation of a graft copolymer containing a perfluoroalkyl group having 7 or more carbon atoms:

The same procedure as in Example 1 was repeated, except that the monomers shown in Table 1 were used.

In the preparation of each of the branch polymer and the graft polymer, 100% of the monomers were consumed. After the completion of the reaction for forming a macromonomer, the NCO absorption peak in the IR spectrum nearly disappeared. The GPC analysis revealed that the number average molecular weight of the resultant polymer was 9,300.

The solvent solubility and surface tension of the resultant polymer were determined. The dispersibility of the tetrafluoroethylene resin powder in the solvent was evaluated. The results are shown in Tables 5 and 7 to 13.

### Example 4

### Preparation of a graft copolymer containing a perfluoroalkyl group having 4 carbon atoms:

The followings were charged in a 1000 mL glass polymerization sample tube, and were reacted at 75°C in a nitrogen atmosphere for 8 hours while shaking, to obtain a branch polymer.

| | |
|---|---|
| Mercaptoethanol | 5.5 g |
| CF₃CF₂CF₂CF₂CH₂CH₂OCOCH=CH₂ (FA') | 90 g |
| Azoisobutyronitrile | 0.28 g |
| Ethyl acetate | 143.1 g |

After the completion of reaction, it was found by the gas chromatograph that 100% of the monomers were consumed. The composition ratio (molar ratio) of the components of the polymer determined by NMR was as follows: mercaptoethanol : FA' = 1.0 : 4.2.

Next, the temperature was decreased to 55-60°C, a solution of 2-isocyanatoethyl methacrylate (13.2 g) in ethyl acetate (19.8 g) and dibutyltin dilaurate (0.13 g) were charged, and the reaction was conducted at a temperature of 55 to 60°C in an air atmosphere for 6 hour while shaking, to give a FA' macromonomer solution. After the completion of reaction, the NCO absorption peak in the IR spectrum nearly disappeared.

Next, the following components were added to a predetermined amount of the resultant FA' macromonomer solution, and the mixture was reacted at 75°C in a nitrogen atmosphere for 8 hours while shaking, to give a graft polymer.

| | |
|---|---|
| FA' macromonomer solution | 15.0 g |
| Polypropyleneglycol methacrylate (HO-(C₃H₆O)ₙ-COC(CH₃)=CH₂ (n = about 13, BLEMER PP-800 manufactured by NOF Corp.) | 1.3 g |
| Methoxypolyethyleneglycol methacrylate (CH₃O-(C₂H₄O)ₙ-COC(CH₃)=CH₂ (n = about 9, BLEMER PME-400 manufactured by NOF Corp.) | 3.4 g |
| n-Butyl methacrylate (BLEMER BMA manufactured by NOF Corp.) | 0.4 g |
| Azoisobutyronitrile | 0.1 g |
| Ethyl acetate | 24.4 g |

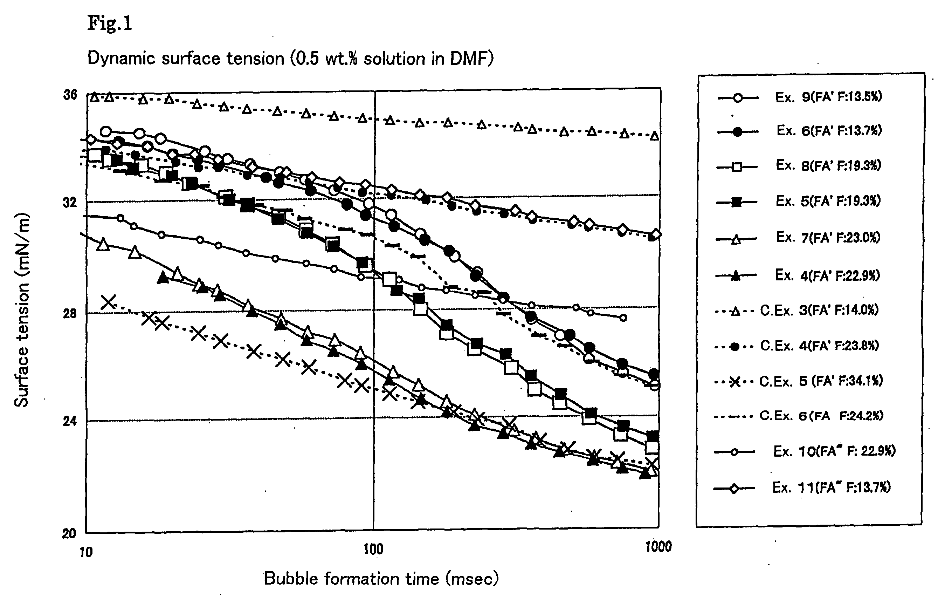

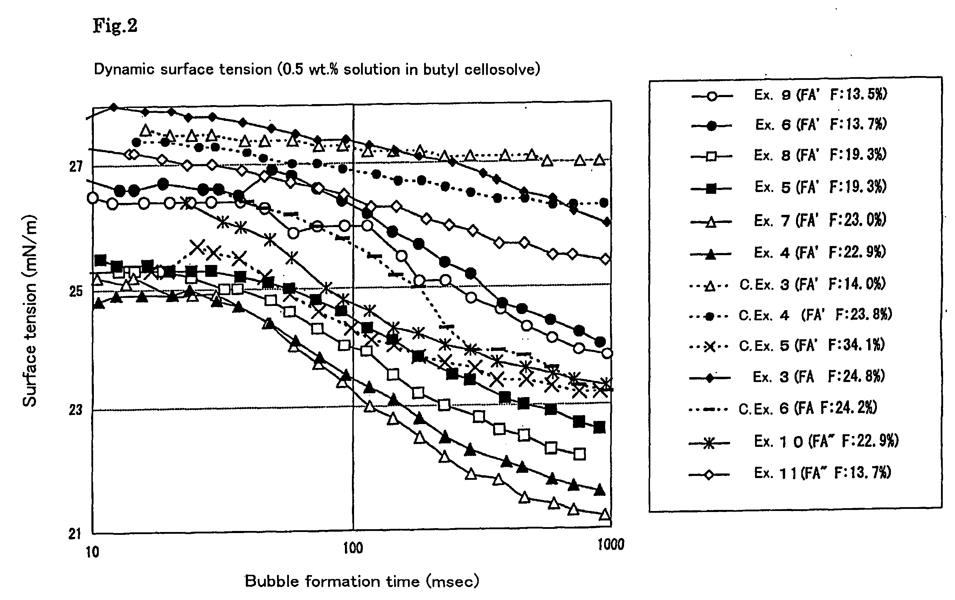

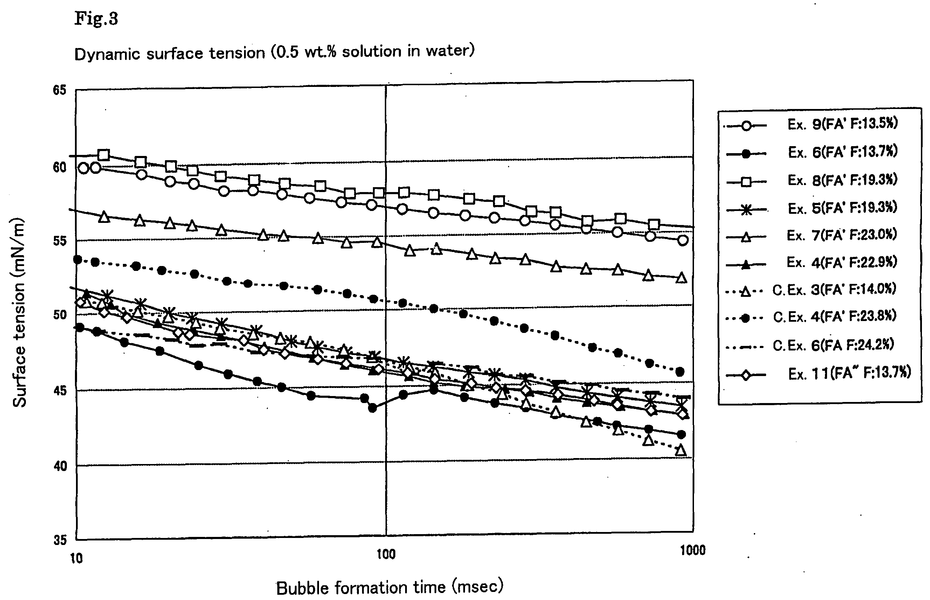

After the completion of reaction, it was found by the gas chromatograph that 95% of the monomers were consumed. The GPC analysis revealed that the number average molecular weight of the resultant polymer was 25,000. The dynamic surface tension, static surface tension, solvent solubility and fluorine content of the resultant polymer were determined. The results are shown in Figs. 1 to 3 and Tables 5 to 9.

### Examples 5 to 9

### Preparation of graft copolymers containing perfluoroalkyl groups each having 4 carbon atoms:

In each of Examples, the procedure of Example 1 was repeated, except that the FA' macromonomer solution prepared in Example 4 was used, and that the monomers shown in Table 2 were used.

In the preparation of each graft polymer, the consumption of the monomers was 95 to 100%. The number average molecular weight of the polymer obtained by distilling off the solvent was determined by GPC, and the fluorine content thereof was determined by an elemental analysis. The dynamic surface tension, static surface tension and solvent solubility of the resultant polymer were determined. The results are shown in Figs. 1 to 3 and Tables 2 and 5 to 9.

### Examples 10 and 11

### Preparation of graft copolymers containing perfluoroalkyl groups each having 2 carbon atoms:

The procedure of Example 4 was repeated, except for the following: CH₃CF₂CH₂OCOCH=CH₂ (FA") was used in place of CF₃CF₂CF₂CF₂CH₂CH₂OCOCH=CH₂ (FA') (90) g; the following components were used to prepare a FA" branch polymer solution (mercaptoethanol : FA" = 1.0 : 4.3 (mol : mol)) in the same manner as in Example 4:

| | |
|---|---|
| Mercaptoethanol | 3.8 g |
| CF₃CF₂CH₂OCOCH=CH2 (FA") | 40 g |
| Azoisobutylonitrile | 0.19 g |
| Ethyl acetate | 65.7 g; |

and
a FA" macromonomer solution prepared from the following components:

| | |
|---|---|
| 2-Isocyanatoethyl methacrylate | 9.1 g |
| Ethyl acetate | 13.7 g |
| Dibutyltin dilaurate | 0.09 g |

and the monomers shown in Table 2 were used.

In the preparation of each of the branch polymers and each of the graft polymers, the consumption of the monomers was 95 to 100%. After the completion of the reaction for forming the macromonomer, the NCO absorption peak in the IR spectrum substantially disappeared. The number average molecular weight of the polymer obtained by distilling off the solvent was determined by GPC, and the fluorine content thereof was determined by an elemental analysis. The dynamic surface tension, static surface tension and solvent solubility of the resultant polymer were determined. The results are shown in Figs. 1 to 3 and Tables 2 and 5 to 9.

### Comparative Example 1

### Preparation of a random copolymer containing a perfluoroalkyl group having at least 7 carbon atoms:

One point zero (1.0) equivalent of 2-isocyanatoethyl methacrylate and 0.7 equivalents of mercaptoethanol were reacted in ethyl acetate at 50°C in the presence of 0.1 g of dibutyltin dilaurate for 12 hours.

To 5.5 g of the resultant reaction product (a reaction product between an isocyanate group-containing vinyl monomer and mercaptoethanol), the following components were added and the mixture was reacted in a nitrogen atmosphere at 75°C for 8 hours while shaking to give a polymer.

| | |
|---|---|
| CF₃CF₂(C₂F₄)ₙC₂H₄OCOCH=CH₂ (FA) [n = 3.5 on average] | 42.7 g |
| Stearyl methacrylate (StMA) | 2.3 g |
| 2-Ethylhexyl methacrylate (2EHMA) | 45.0 g |
| Maleic anhydride (MAN) | 4.5 g |
| Ethyl acetate | 515 g |
| Tert-butylperoxy pivalate (PERBUTYL PV, manufactured by NOF Corp.) | 9 g |

Substantially 100% of the monomers were polymerized. The resultant polymer was not a graft polymer. The GPC analysis revealed that the number average molecular weight of the resultant polymer was 15,000.

The solvent solubility and dispersibility of the resultant polymer were determined. The results are shown in Tables 5 and 12.

### Comparative Example 2

### Preparation of a random copolymer containing a perfluoroalkyl group having at least 7 carbon atoms:

The same procedure as in Comparative Example 1 was repeated, except that the monomers shown in Table 3 were used.

Substantially 100% of the monomers were polymerized. The resultant polymer was not a graft polymer. The GPC analysis revealed that the number average molecular weight of the resultant polymer was 14,000.

The solvent solubility and dispersibility of the resultant polymer were determined. The results are shown in Tables 5 and 12.

### Comparative Example 3 to 6

### Preparation of random copolymers containing perfluoroalkyl groups each having 4 or at least 7 carbon atoms:

The same procedure as in Comparative Example 1 was repeated, except that the monomers shown in Table 4 were used.

The resultant polymers were not graft polymers. The number average molecular weights of the polymers were determined by GPC. The dynamic and static surface tensions, solvent solubility and dispersibility and fluorine contents of the polymers were determined. The results are shown in Figs. 1 to 3 and Tables 5 to 9.

**Table 1**

| Compositions of Monomers (parts by weight) | | | | | | | |
|---|---|---|---|---|---|---|---|
| | Branch polymer | | | Trunk polymer | | | |
| | Macromonomer | | | | | | |
| | Mercaptoethanol | FA | StMA | 2-Isocyanatoethyl methacrylate | Isocyanate-containing vinyl monomer | 2-EHMA | MAN |
| Ex. 1 | 3 | 95 | 5 | 9 | - | 100 | 10 |
| Ex. 2 | 3 | 95 | 5 | - | 38 | 100 | 10 |
| Ex. 3 | 3 | 95 | 5 | 12 | - | 110 | 4 |
| Notes) | | | | | | | |
| FA: CF₃CF₂(C₂F₄)ₙC₂H₄OCOCH=CH₂ n = 3.5 on average | | | | | | | |
| StMA: Stearyl methacrylate | | | | | | | |
| 2-EHMA: 2-Ethylhexyl methacrylate | | | | | | | |
| MAN: Maleic anhydride | | | | | | | |
| Isocyanate group-containing vinyl monomer: A 50 wt.% solution of the isocyanate group-containing monomer of Synthesis Example 1 | | | | | | | |

**Table 2**

| Composition of Monomers (parts by weight) | | | | | | |
|---|---|---|---|---|---|---|
| | Macromonomer | PPGMA | MEGMA | BMA | Number average molecular weight | Fluorine-containing acrylate species |
| Ex. 4 | 54.1 | 12.0 | 30.6 | 3.3 | 25,000 | FA' |
| Ex. 5 | 45.1 | 14.5 | 37.1 | 3.3 | 17,000 | FA' |
| Ex. 6 | 31.6 | 18.4 | 46.7 | 3.3 | 17,500 | FA' |
| Ex. 7 | 54.1 | 0 | 42.6 | 3.3 | 23,000 | FA' |
| Ex. 8 | 45.1 | 0 | 51.6 | 3.3 | 17,800 | FA' |
| Ex. 9 | 31.5 | 0 | 65.2 | 3.3 | 13,100 | FA' |
| Ex. 10 | 68.7 | 7.9 | 20.1 | 3.3 | 23,900 | FA" |
| Ex. 11 | 40.0 | 16.0 | 40.7 | 3.3 | 17,800 | FA" |
| Notes) | | | | | | |
| Macromonomer: The weight parts of the solid content in the macromonomer solution prepared by using FA' or FA" in each of Examples 4 to 11. | | | | | | |
| FA': CF₃CF₂CF₂CF₂CH₂CH₂OCOCH=CH₂, manufactured by Daikin Fine Chemical Laboratory | | | | | | |
| FA": CF₃CF₂CH₂OCOCH=CH₂, manufactured by Daikin Fine Chemical Laboratory | | | | | | |
| PPGMA: HO-(C₃H₆O)ₙ-COCH=CH₂ (n = about 13), BLEMER PP-800, manufactured by NOF Corp. | | | | | | |
| MEGMA: CH₃O-(C₂H₄O)ₙ-COCH=CH₂ (n = about 13), BLEMER PME-400, manufactured by NOF Corp. | | | | | | |
| BMA: n-Butyl methacrylate, BLEMER BMA, manufactured by NOF Corp. | | | | | | |

**Table 3**

| Amounts of Monomers (g) | | | | | |
|---|---|---|---|---|---|
| | FA | StMA | 2-EHMA | MAN | 2-Isocyanatoethyl methacrylate |
| C. Ex. 1 | 42.7 | 2.3 | 45.0 | 4.5 | 5.5 |
| C. Ex. 2 | 41.2 | 2.2 | 48.1 | 1.9 | 6.6 |
| Notes) | | | | | |
| FA: CF₃CF₂(C₂F₄)ₙC₂H₄OCOCH=CH₂, n = average 3.5 | | | | | |
| StMA: Stearyl methacrylate | | | | | |
| 2-EHMA: 2-Ethylhexyl methacrylate | | | | | |
| MAN: Maleic anhydride | | | | | |

**Table 4**

| Compositions of Monomers (parts by weight) | | | | | | | | |
|---|---|---|---|---|---|---|---|---|
| | FA | FA' | PPGMA | MEGMA | GLM | CHPM | Mercaptoethanol | Number average molecular weight |
| C. Ex. 3 | 0 | 27.1 | 16.4 | 39.2 | 4.1 | 12.3 | 1.0 | 6700 |
| C. Ex. 4 | 0 | 44.9 | 12.4 | 29.6 | 3.1 | 9.3 | 0.8 | 6700 |
| C. Ex. 5 | 0 | 63.0 | 8.4 | 20.1 | 2.1 | 6.3 | 0 | 13000 |
| C. Ex. 6 | 39.3 | 0 | 17.2 | 29.7 | 5.7 | 8.1 | 0 | 17800 |
| Notes) | | | | | | | | |
| FA: CF₃CF₂(CF₂CF₂)ₙCH₂CH₂OCOCH=CH₂, n = average 3.5 | | | | | | | | |
| FA' : CF₃CF₂CF₂CF₂CH₂CH₂OCOCH=CH₂, manufactured by Daikin Fine Chemical Laboratory | | | | | | | | |
| PPGMA: HO-(C₃H₆O)ₙ-COCH=CH₂ (n 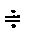 13), BLEMER PP-800 manufactured by NOF Corp. | | | | | | | | |
| MEGMA: CH₃O-(C₂H₄O)ₙ-COCH=CH₂ (n 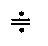 9), BLEMER PME-400 manufactured by NOF Corp. | | | | | | | | |
| GLM: Glycerol methacrylate, BLEMER GLM manufactured by NOF Corp. | | | | | | | | |
| CHPM: 3-Chloro-2-hydroxypropyl methacrylate, TOPOLENE M manufactured by SHIN-NAKAMURA CHEMICAL CO., LTD. | | | | | | | | |

**Table 5**

| Solubility in Solvent | | | | | | | | | |
|---|---|---|---|---|---|---|---|---|---|
| | Water | DMF | Butyl cellosolve | Ethyl acetate | Toluene | MEK | IPA | Acetone | n-Heptane |
| Ex. 1 | IS | SS | VS | VS | VS | VS | IS | SS | S |
| Ex. 2 | IS | SS | VS | VS | VS | VS | IS | SS | S |
| Ex. 3 | IS | SS | VS | VS | VS | VS | IS | SS | S |
| Ex. 4 | VS | VS | VS | VS | VS | VS | VS | VS | IS |
| Ex. 5 | VS | VS | VS | VS | VS | VS | VS | VS | IS |
| Ex. 6 | VS | VS | VS | VS | VS | VS | VS | VS | IS |
| Ex. 7 | VS | VS | VS | VS | S | VS | SS | VS | IS |
| Ex. 8 | VS | VS | VS | VS | VS | VS | SS | VS | IS |
| Ex. 9 | VS | VS | VS | VS | VS | VS | VS | VS | IS |
| Ex. 10 | IS | VS | VS | VS | VS | VS | S | VS | IS |
| Ex. 11 | VS | VS | VS | VS | VS | VS | SS | VS | IS |
| C. Ex. 1 | IS | IS | IS | IS | IS | IS | IS | IS | IS |
| C. Ex. 2 | IS | IS | IS | IS | IS | IS | IS | IS | IS |
| C. Ex. 3 | VS | VS | VS | VS | VS | VS | VS | VS | IS |
| C. Ex. 4 | VS | VS | VS | VS | VS | VS | VS | VS | IS |
| C. Ex. 5 | SS | VS | VS | VS | VS | VS | VS | VS | IS |
| C. Ex. 6 | SS | VS | VS | VS | VS | VS | VS | VS | IS |
| DMF: Dimethyl formamide | | | | | | | | | |
| MEK: Methyl ethyl ketone | | | | | | | | | |
| IPA: Isopropanol | | | | | | | | | |

**Table 6**

| Fluorine Content of Polymer Containing Various Perfluoroalkyl acrylates | | |
|---|---|---|
| | Fluorine-containing acrylate species | Fluorine content (value found by elemental analysis) |
| Ex. 4 (graft polymer) | FA' | 22.9 |
| Ex. 5 (graft polymer) | FA' | 19.3 |
| Ex. 6 (graft polymer) | FA' | 13.7 |
| Ex. 7 (graft polymer) | FA' | 23.0 |
| Ex. 8 (graft polymer) | FA' | 19.3 |
| Ex. 9 (graft polymer) | FA' | 13.5 |
| Ex. 10 (graft polymer) | FA" | 22.9 |
| Ex. 11 (graft polymer) | FA" | 13.7 |
| C. Ex. 3 (random polymer) | FA' | 14.0 |
| C. Ex. 4 (random polymer) | FA' | 23.8 |
| C. Ex. 5 (random polymer) | FA' | 34.1 |
| C. Ex. 6 (random polymer) | FA | 24.2 |
| Notes) | | |
| FA: CF₃CF₂(CF₂CF₂)ₙCH₂CH₂OCOCH=CH₂, n = 3.5 on average | | |
| FA' : CF₃CF₂CF₂CF₂CH₂CH₂OCOCH=CH₂, manufactured by Daikin Fine Chemical Laboratory | | |
| FA": CF₃CF₂CH₂OCOCH=CH₂, manufactured by Daikin Fine Chemical Laboratory | | |

**Table 7**

| Static Surface Tension in DMF The static surface tension without surfactant: 36.8 mN/m Temperature: 25°C | | | | | | | | |
|---|---|---|---|---|---|---|---|---|
| Concentration (log) | Static surface tension in DMF | | | | | | | |
| | Ex. 1 | Ex. 2 | Ex. 3 | Ex. 4 | Ex. 5 | Ex. 6 | Ex. 7 | Ex. 8 |
| 0 | 21.1 | 22.1 | 21.5 | 19.8 | 20.4 | 20.7 | 19.8 | 20.1 |
| -1 | 21.0 | 21.0 | 22.0 | 20.3 | 21.2 | 22.1 | 20.3 | 20.9 |
| -2 | 23.9 | 24.9 | 24.2 | 20.7 | 22.9 | 25.2 | 21.6 | 22.4 |
| -3 | 31.8 | 32.0 | 31.5 | 25.6 | 27.8 | 30.9 | 26.9 | 28.1 |

| Concentration (log) | Static surface tension in DMF | | | | | | | |
|---|---|---|---|---|---|---|---|---|
| | Ex. 9 | Ex. 10 | Ex. 11 | C. Ex. 3 | C. Ex. 4 | | C. Ex. 5 | C. Ex. 6 |
| 0 | 20.2 | 25.7 | 26.1 | 31.1 | 26.3 | | 20.9 | 17.2 |
| -1 | 21.4 | 26.6 | 28.4 | 32.5 | 28.6 | | 22.5 | 17.2 |
| -2 | 24.5 | 28.1 | 30.3 | 34.5 | 31.0 | | 25.4 | 25.5 |
| -3 | 30.9 | 30.5 | 32.5 | 35.4 | 33.3 | | 29.6 | 30.9 |

**Table 8**

| Static Surface Tension in Butyl cellosolve The static surface tension without surfactant: 27.6 mN/m Temperature: 25°C | | | | | | | | |
|---|---|---|---|---|---|---|---|---|
| Concentration (log) | Static surface tension in butyl cellosolve | | | | | | | |
| | Ex. 1 | Ex. 2 | Ex. 3 | Ex. 4 | Ex. 5 | Ex. 6 | Ex. 7 | Ex. 8 |
| 0 | 19.5 | 19.6 | 20.1 | 19.5 | 18.4 | 19.9 | 18.6 | 19.2 |
| -1 | 20.7 | 20.6 | 22.0 | 20.0 | 19.0 | 21.3 | 19.2 | 21.3 |
| -2 | 22.1 | 22.4 | 23.5 | 21.2 | 20.1 | 23.2 | 20.3 | 23.2 |
| -3 | 25.0 | 26.2 | 26.3 | 23.8 | 22.5 | 25.3 | 22.2 | 25.3 |

| Concentration (log) | Static surface tension in butyl cellosolve | | | | | | | |
|---|---|---|---|---|---|---|---|---|
| | Ex. 9 | Ex. 10 | Ex. 11 | C. Ex. 3 | C. Ex. 4 | | C. Ex. 5 | C. Ex. 6 |
| 0 | 19.5 | 22.2 | 23.1 | 26.8 | 25.1 | | 21.1 | 18.1 |
| -1 | 20.3 | 22.7 | 24.3 | 27.2 | 26.0 | | 22.3 | 20.5 |
| -2 | 22.5 | 24.1 | 25.6 | 27.3 | 26.8 | | 24.1 | 23.7 |
| -3 | 25.1 | 26.8 | 26.5 | 27.3 | 27.2 | | 26.0 | 26.5 |

**Table 9**

| Static Surface Tension in Ethyl Acetate The static surface tension without surfactant: 22.5 mN/m Temperature: 25°C | | | | | | | | |
|---|---|---|---|---|---|---|---|---|
| Cocentration (log) | Static surface tension in ethyl acetate | | | | | | | |
| | Ex. 1 | Ex. 2 | Ex. 3 | Ex. 4 | Ex. 5 | Ex. 6 | Ex. 7 | Ex. 8 |
| 0 | 15.4 | 15.6 | 15.6 | 19.5 | 19.8 | 19.1 | 19.5 | 19.7 |
| -1 | 16.8 | 16.4 | 16.7 | 19.9 | 20.2 | 19.6 | 19.9 | 20.3 |
| -2 | 19.0 | 19.0 | 19.2 | 20.4 | 21.4 | 21.1 | 20.5 | 21.0 |
| -3 | 21.3 | 20.6 | 22.0 | 21.2 | 21.9 | 22.0 | 20.9 | 21.8 |

| Concentration (log) | Static surface tension in ethyl acetate | | | | | | | |
|---|---|---|---|---|---|---|---|---|
| | Ex. 9 | Ex. 10 | Ex. 11 | C. Ex. 3 | C. Ex. 4 | | C. Ex. 5 | C. Ex. 6 |
| 0 | 19.1 | 21.8 | 21.9 | 23.0 | 22.2 | | 21.7 | 18.1 |
| -1 | 19.6 | 21.8 | 22.0 | 23.0 | 22.7 | | 22.0 | 20.5 |
| -2 | 21.1 | 21.8 | 22.0 | 23.0 | 22.8 | | 22.2 | 23.7 |
| -3 | 22.0 | 21.9 | 22.0 | 23.0 | 22.8 | | 22.3 | 26.5 |

**Table 10**

| Static Surface Tension in Toluene The static surface tension without surfactant: 28.7 mN/m | | | |
|---|---|---|---|
| Concentration (log) | Static surface tension of compound of Ex. 1 | Static surface tension of compound of Ex. 2 | Static surface tension of compound of Ex. 3 |
| 0 | 16.6 | 16.4 | 15.7 |
| -1 | 18.9 | 19.0 | 16.4 |
| -2 | 23.1 | 23.0 | 20.1 |
| -3 | 25.3 | 25.5 | 23.3 |

**Table 11**

| Static Surface Tension in n-Heptane The static surface tension without surfactant: 20.0 mN/m | | | |
|---|---|---|---|
| Concentration (log) | Static surface tension of compound of Ex. 1 2 | Static surface tension of compound of Ex. | Static surface tension of compound of Ex. 3 |
| 0 | 15.8 | 15.9 | 15.6 |
| -1 | 16.2 | 16.3 | 16.0 |
| -2 | 18.4 | 18.5 | 17.5 |
| -3 | 19.4 | 19.5 | 19.1 |

**Table 12**

| Dispersibility of Tetrafluoroethylene (PTFE) Resin Powder in Butyl cellosolve | |
|---|---|
| | Dispersibility of PTFE powder in butyl cellosolve |
| Compound of Ex. 1 | Good |
| Compound of Ex. 2 | Good |
| Compound of Ex. 3 | Good |
| Compound of C. Ex. 1 | No good (agglomerated and precipitated) |
| Compound of C. Ex. 2 | No good (agglomerated and precipitated) |

**Table 13**

| Dispersibility of Tetrafluoroethylene (PTFE) Resin Powder in Hydrocarbon Solvent | | | | | | |
|---|---|---|---|---|---|---|
| Compound of Ex. 3 | PTFE | Butyl acetate | Hexane | Heptane | Turpentine | Dispersibility |
| 4.0 g | 4.0 g | 6.0 g | 2.0 g | - | - | Good |
| 4.0 g | 4.0 g | 4.0 g | 4.0 g | - | - | Good |
| 4.0 g | 4.0 g | 2.0 g | 6.0 g | - | - | Good |
| 4.0 g | 4.0 g | 7.2 g | - | 0.8 g | - | Good |
| 4.0 g | 4.0 g | 6.0 g | - | 2.0 g | - | Good |
| 4.0 g | 4.0 g | 4.0 g | - | 4.0 g | - | Good |
| 4.0 g | 4.0 g | 2.0 g | - | 6.0 g | - | Good |
| 4.0 g | 4.0 g | 10.0 g | - | 10.0 g | - | Good |
| 4.0 g | 4.0 g | 20.0 g | - | 20.0 g | - | Good |
| 4.0 g | 4.0 g | 7.2 g | - | - | 0.8 g | Good |
| 4.0 g | 4.0 g | 6.0 g | - | - | 2.0 g | Good |
| 4.0 g | 4.0 g | 4.0 g | - | - | 4.0 g | Good |
| 4.0 g | 4.0 g | 2.0 g | - | - | 6.0 g | Good |
| 4.0 g | 4.0 g | 18.0 g | - | - | 2.0 g | Good |
| 4.0 g | 4.0 g | 16.0 g | - | - | 4.0 g | Good |
| 4.0 g | 4.0 g | 14.0 g | - | - | 6.0 g | Good |

### EFFECT OF THE INVENTION

The graft polymers of the present invention can be used as surfactants which exhibit comparable or superior surface tension-lowering actions to random polymers, in spite of containing smaller amounts of fluorine than the random polymers, and can concurrently exhibit actions of fluorine components and hydrocarbon components. For example, the graft polymers of the present invention exhibit superior surface activating actions, and act to disperse, in solvents having small environmental loads, powder of fluoropolymers which have high molecular weights, high fluorine content, and poor affinity with such solvents, to thereby provide liquid dispersions of such fluoropolymers in the solvents having small environmental loads. Further, the graft polymers of the present invention can exhibit excellent properties, in spite of having repeating units comprising short-chain perfluoroalkyl groups each having at most 7 carbon atoms.

## Claims

1. A surfactant comprising a graft polymer having a branch polymer and a trunk polymer, at least one of which contains a fluoroalkyl group.

2. The surfactant according to claim 1, wherein at least one of the branch polymer and the trunk polymer has a repeating unit containing the fluoroalkyl group.

3. The surfactant according to claim 1 or 2, wherein the fluoroalkyl group has 1 to 7 carbon atoms.

4. The surfactant according to claim 3, wherein the fluoroalkyl group is C₄F₉.

5. The surfactant according to claim 1, wherein the branch polymer containing a fluoroalkyl group is bonded to the trunk polymer.

6. The surfactant according to claim 1, wherein the branch polymer containing a fluoroalkyl group is bonded to the trunk polymer through a linkage having a -C(=O)NH- group.

7. The surfactant according to claim 1, wherein the linkage having a -C(=O)NH- group is formed by the reaction between an active hydrogen group contained in a chain transfer agent constituting the branch polymer and an isocyanate group contained in a monomer constituting the trunk polymer.

8. A dispersion aid comprising the surfactant according to anyone of claims 1 to 7.

9. The dispersion aid according to claim 8, for use in dispersing a fluoropolymer.

10. The dispersion aid according to claim 8, wherein the fluoropolymer is a tetrafluoroethylene resin powder.

11. A fluoropolymer dispersion composition comprising the dispersion aid according to claim 8, a fluoropolymer and a liquid medium.

12. An article having a surface coating film formed from the fluoropolymer dispersion composition according to claim 11.
